# EUROPÄISCHE PATENTSCHRIFT

(11) **EP 4 256 947 B1**
(45) Veröffentlichungstag und Bekanntmachung des Hinweises auf die Patenterteilung: **06.08.2025**
(21) Anmeldenummer: 23150857.3
(22) Anmeldetag: 10.01.2023
(51) Int. Cl.: A01D 90/02

(54) **LANDWIRTSCHAFTLICHER LADEWAGEN**
AGRICULTURAL LOADER
REMORQUE AGRICOLE

(30) Priorität: 07.04.2022 DE 202022101877 U
(43) Veröffentlichungstag der Anmeldung: 11.10.2023
(73) Patentinhaber: Pöttinger Landtechnik GmbH, 4710 Grieskirchen (AT)
(72) Erfinder: MARBÖCK, Simon, 4710 Grieskirchen (AT)
(74) Vertreter: Thoma, Michael

(56) Entgegenhaltungen:
- EP-A2- 3 320 767
- DE-A1- 1 507 433
- DE-A1- 3 334 500
- DE-U- 7 501 150

## Beschreibung

Die vorliegende Erfindung betrifft einen landwirtschaftlichen Ladewagen mit einer Aufnahmevorrichtung zum Aufnehmen von Erntegut vom Boden sowie einem Laderaum zum Speichern des aufgenommenen Ernteguts, wobei an einem oberen Frontwandabschnitt einer Frontwand des Laderaums eine Ladeklappe schwenkbar und/oder höhenverstellbar gelagert ist, wobei ein Verstellmechanismus zum Einstellen verschiedener Betriebsstellungen der Ladeklappe vorgesehen ist.

Bei landwirtschaftlichen Ladewägen zum Einbringen von Heu, Gras, Stroh oder anderem Erntegut wird das vom Boden aufgenommene Erntegut durch die Aufnahmevorrichtung üblicherweise im Bereich der Frontwand in den Laderaum befördert, so dass sich das Erntegut im Laderaum an der Frontwand aufhäuft und durch einen Kratzboden im Laderaum weiter nach hinten verteilt werden kann, wenn die frontwandseitige Aufhäufung zu hoch wird. Dabei ist es bekannt, die genannte Frontwand mehrgliedrig auszubilden und einen oberen Frontwandabschnitt klappbar zu lagern, vgl. DE 75 01 150 U. Um den Kratzbodenantrieb zu steuern, ist es ferner bekannt, am oberen Frontwandabschnitt eine Ladeklappe anzubringen, gegen die das sich aufhäufende Erntegut drückt, wenn die Aufrollung die entsprechende Höhe erreicht hat. Eine Sensorik kann dabei den sich an der Ladeklappe aufbauenden Druck oder auch eine Ausweichbewegung der Ladeklappe nach oben erfassen, wenn das Erntegut die Ladeklappe nach oben drückt. Ein Sensorsignal, dass einen entsprechenden Erntegutdruck an der Ladeklappe oder eine Ausweich- bzw. Verstellbewegung der Ladeklappe angibt, kann dem Schlepperführer anzeigen, dass der Kratzboden anzustellen ist, oder von einer elektronischen Steuervorrichtung automatisiert verarbeitet werden, um in Abhängigkeit des Sensorsignals den Kratzboden anzustellen.

Eine solche Ladeklappe am oberen Frontwandabschnitt kann aber nicht nur zur Steuerung des Kratzbodenantriebs genutzt werden, sondern auch als Leitfläche für das Erntegut dienen, um das sich aufhäufende Erntegut von der Frontwand weg nach hinten in den Laderaum zu leiten bzw. umzuleiten und/oder zu verhindern, dass das Erntegut zu weit nach oben über die Frontseitenwände des Laderaums hinaustritt.

Die genannte Ladeklappe kann sich dabei in näherungsweise liegender oder schräg geneigter Ausrichtung vom oberen Frontwandabschnitt in den Laderaum hinein erstrecken, wobei die Ladeklappe direkt an den oberen Frontwandabschnitt anschlie-ßen oder auch ein Stück davon beabstandet angeordnet sein kann. Die Ladeklappe kann dabei schwenkbar am oberen Frontwandabschnitt oder auch an benachbarten oberen Seitenwandabschnitten beweglich gelagert sein, um in verschiedene Betriebsstellungen verbracht werden zu können. Insbesondere kann die genannte Ladeklappe um eine liegende, sich quer zur Fahrtrichtung erstreckende Schwenkachse schwenkbar gelagert sein, wobei alternativ oder zusätzlich die Ladeklappe aber auch translatorisch verschiebbar gelagert sein kann, um in der Höhe und/oder im Abstand von der Frontwand verstellt werden zu können. Beispielsweise könnte eine schwenkbare Lagerung einer Schwenkachse vorgesehen sein, die in aufrechter Richtung translatorisch verstellbar ist, so dass die Ladeklappe in verschiedene Stellungen schwenkbar und zusätzlich durch translatorisches Verschieben der Schwenkachse höhenverstellbar ist. Grundsätzlich wäre es aber auch möglich, nur eine schwenkbare Lagerung oder nur eine translatorische Verschiebbarkeit vorzusehen, um die Ladeklappe in verschiedene Betriebsstellungen bringen zu können.

Eine solche Verstellbarkeit der Ladeklappe ist insbesondere hilfreich, um verschiedenen Einsatzsituationen gerecht werden zu können. Speziell kleinere Ladewagen, gelegentlich aber auch großvolumige Ladewagen müssen die Anforderung Einsatzvielfalt erfüllen, was üblicherweise beinhaltet, dass je nach aufgenommenem Futter der Laderaum nicht vollständig, sondern nur teilweise befüllt werden soll. Beispielsweise soll üblicherweise bei trockenem, leichtem Erntegut wie Heu das Laderaumvolumen möglichst vollständig genutzt und befüllt werden, während bei schwererem, feuchterem Erntegut eine geringere Füllhöhe sinnvoll sein kann. In beiden Fällen, d.h. sowohl bei Vollbefüllung als auch bei Teilbefüllung soll die zuvor genannte Ladeautomatik funktionsfähig sein, was es erfordert, die Ladeklappe in verschiedene Ausgangs- bzw. Betriebsstellungen zu bringen, insbesondere in ihrer Höhe oder ihrer Neigung zu verstellen, so dass das sich beim Beladen aufhäufende Erntegut früher oder später bzw. in der jeweils gewünschten Füll- bzw. Ladehöhe gegen die Ladeklappe drückt bzw. auf die Ladeklappe trifft, um beispielsweise das genannte Sensorsignal auszulösen oder in der beschriebenen Weise umgelenkt zu werden und in einen weiter hinter liegenden Bereich des Laderaums zu fallen.

Die Verstellung der Ladeklappe in verschiedene Betriebsstellungen ist jedoch üblicherweise mühsam und zeitaufwendig. Beispielsweise zeigt die Schrift EP 0 477 716 B1 einen Ladewagen mit einer höhenverstellbaren Ladeklappe am oberen Frontwandabschnitt der Frontwand des Laderaums, der ein Drucksensor zugeordnet ist, um sich an der Ladeklappe aufbauenden Erntegutdruck erfassen zu können. Ein Verstellmechanismus zum Höhenverstellen der Ladeklappe besteht im Wesentlichen aus ein- und ausbaubaren Verlängerungsstücken, durch die eine höhere bzw. eine tiefere Betriebsposition montiert werden kann. Dies ist nicht nur für den Maschinenführer aufwändig und auch verletzungsträchtig, da der Maschinenführer auf die Laderaumwandung klettern bzw. in den Laderaum hineinsteigen muss, sondern auch sehr zeitaufwändig, was bedeutet, dass der Ladewagen während der Umrüstzeit nicht verwendet werden kann.

Ferner zeigt die Schrift EP 3 771 324 A1 einen landwirtschaftlichen Ladewagen mit einer insgesamt mehrgliedrig verstellbaren Frontwand, deren oberer Frontwandabschnitt schräg nach hinten in den Laderaum hinein geschwenkt werden kann, um als Ladeklappe zu fungieren. Die Verstellung der Frontwand erfolgt dabei über mehrere Hydraulikzylinder, die in ihren Stellungen aufeinander abzustimmen sind, um die gewünschte Frontwandkonfiguration zu erzielen, was eine entsprechende Hydrauliksteuerung erfordert. Eine solche hydraulikverstellbare Frontwand ist jedoch bei kleineren oder preisgünstigeren Ladewagenserien üblicherweise nicht vorhanden bzw. nur teuer zu realisieren.

Der vorliegenden Erfindung liegt daher die Aufgabe zugrunde, einen verbesserten landwirtschaftlichen Ladewagen der eingangs genannten Art zu schaffen, der Nachteile des Stands der Technik vermeidet und letzteren in vorteilhafter Weise weiterbildet. Insbesondere soll eine einfache Verstellbarkeit der Ladeklappe in verschiedene Betriebsstellungen erreicht werden.

Erfindungsgemäß wird die genannte Aufgabe durch einen landwirtschaftlichen Ladewagen gemäß Anspruch 1 gelöst. Bevorzugte Ausgestaltungen der Erfindung sind Gegenstand der abhängigen Ansprüche.

Es wird also vorgeschlagen, eine Handverstellung für die Ladeklappe vorzusehen, die von einer neben dem Ladewagen auf dem Boden stehenden Person betätigbar ist und dem Maschinenführer ein Hineinsteigen in den Laderaum oder Hinaufklettern auf die Laderaumwandung erspart. Erfindungsgemäß besitzt der Verstellmechanismus zum Einstellen verschiedener Betriebsstellungen der Ladeklappe einen Handstellhebel zum werkzeugfreien Einstellen verschiedener Betriebsstellungen der Ladeklappe, wobei der genannte Handstellhebel auf einer Außenseite des Laderaums unterhalb der halben Höhe des Laderaums vorgesehen und durch ein Übertragergetriebe mit der Ladeklappe verbunden ist. Der außenseitig vom Laderaum vorzugsweise in Bauch- oder Brusthöhe angeordnete Handstellhebel kann ohne Werkzeuge ein- oder zweihändig bewegt bzw. verstellt werden, wobei das Übertragergetriebe die Stellbewegung des Handstellhebels auf die Ladeklappe überträgt und in eine Stellbewegung der Ladeklappe umsetzt.

Um einfach zugänglich zu sein, andererseits aber die Gesamtbreite des Ladewagens nicht zu vergrößern und nicht Gefahr zu laufen, im Vorbeifahren an einem Hindernis hängenzubleiben, kann der genannte Handstellhebel an einer Außenseite der Frontwand des Laderaums vorgesehen sein, insbesondere im Bereich eines unteren Frontwandabschnitts und/oder oberhalb eines frontseitig vom Laderaum vorspringenden Chassis- oder Funktionsbauteils des Ladewagens, das sich von der Frontseite des Ladewagens zum Schlepper hin erstreckt. Üblicherweise kann ein solches Chassis- und/oder Funktionsbauteil eine Deichsel bzw. deren Anlenkung am Maschinenrahmen und/oder einen Teil des Antriebsstrangs von der Gelenkwelle zu verschiedenen Funktionsaggregaten, ggf. umfassend Verteilergetriebe und ähnliches umfassen, wobei auch querliegende Antriebswellen in dem besagten Bereich des Chassis- und/oder Funktionsbauteils angeordnet sein können, oberhalb dessen dann der genannte Handstellhebel vorteilhafterweise angeordnet sein kann.

Das genannte Chassis- und/oder Funktionsbauteil kann sich insbesondere über der Aufnahmevorrichtung zum Aufnehmen des Ernteguts vom Boden erstrecken und/oder auch Teile wie beispielsweise einen Rotor der Aufnahmevorrichtung umfassen. Oberhalb dieser Funktionsbaugruppe wird der genannte Handstellhebel angeordnet.

Der genannte Handstellhebel kann dabei an der Frontwand beweglich gelagert, oder auch an dem zuvor genannten Chassis- und/oder Funktionsbauteil beweglich gelagert sein. Vorteilhafterweise kann der Handstellhebel um eine liegende, sich quer zur Fahrtrichtung erstreckende Schwenkachse schwenkbar gelagert sein.

Das Übertragergetriebe kann ein Übertragergestänge umfassen, das an dem Handstellhebel gelenkig angelenkt ist, insbesondere beabstandet von einer Schwenkachse des Handstellhebels, sodass eine Schwenkbewegung des Handstellhebels in eine translatorische Schub- und/oder Zugbewegung des Übertragergestänges umgesetzt wird. Alternativ oder zusätzlich kann das Übertragergetriebe auch eine Verseilung aufweisen, um die Stellbewegung des Handstellhebels auf die Ladeklappe zu übertragen.

Vorteilhafterweise ist dem genannten Handstellhebel eine Halte- bzw. Arretiervorrichtung zugeordnet, um den Haltehebel in verschiedenen Betätigungsstellungen fixieren und damit die Ladeklappe in verschiedenen Betriebsstellungen halten zu können. Alternativ oder zusätzlich kann eine solche Halte- und/oder Arretiervorrichtung auch dem Übertragergetriebe zugeordnet sein, sodass nicht unbedingt der Handstellhebel selbst, sondern ein Element des Übertragergetriebes entsprechend gehalten bzw. arretiert wird, wenn eine jeweils gewünschte Betriebsstellung der Ladeklappe eingestellt ist.

Vorteilhafterweise ist die genannte Halte- und/oder Arretiervorrichtung aber zumindest in der Nähe des Handstellhebels angeordnet, um gleichermaßen wie der Handstellhebel gut zugänglich zu sein, insbesondere gelöst und/oder fixiert werden zu können.

Die genannte Halte- und/oder Arretiervorrichtung kann stufenlos arbeitend ausgebildet sein, beispielsweise eine Klemmvorrichtung oder eine reibschlüssige Haltbremse umfassen, um die Ladeklappe stufenlos verstellen und in beliebigen Betriebsstellungen fixieren zu können.

Alternativ oder zusätzlich kann die Halte- und/oder Arretiervorrichtung aber auch verschiedene Verstellstufen vorgeben bzw. in vorgegebenen Verstellstufen blockiert bzw. arretiert werden, um entsprechend vordefinierte Betriebsstellungen der Ladeklappe einstellen zu können.

Beispielsweise kann die Halte- und/oder Arretiervorrichtung formschlüssige Haltemittel umfassen, die vorbestimmte Eingriffsstellungen aufweisen, um den Handstellhebel bzw. das Übertragergetriebe und damit die Ladeklappe in vorbestimmten Betriebsstellungen fixieren zu können.

Beispielsweise können solche formschlüssigen Haltemittel einen Rastmechanismus aufweisen, der an vorbestimmten Stellungen einrasten kann. Beispielsweise kann an dem Handstellhebel ein Rastzapfen oder eine Rastklinke vorgesehen sein, der/die in Rastausnehmungen einrasten kann, die entlang einer Bahn verteilt angeordnet sein können, die von dem Rastzapfen bzw. der Rastklinke beim Bewegen des Handstellhebels überstrichen wird. Ist der Handstellhebel schwenkbar gelagert, kann ein Rastausnehmungsraster auf einer Kreisbahn um die Schwenkachse des Handstellhebels vorgesehen sein, in die der Rastzapfen bzw. die Rastklinke am Handstellhebel einrasten kann.

Alternativ zu einem Rastzapfen oder einer Rastklinke am Handstellhebel kann ein bewegliches Rastelement aber auch an einem Lagerbock vorgesehen sein, an dem der Handstellhebel beweglich gelagert ist, wobei am Handstellhebel damit zusammenwirkende Rastauswirkungen vorgesehen sein können, sodass das am Lagerbock beweglich gelagerte Rastelement in eine jeweilige Rastausnehmung am Handstellhebel einrasten kann, wenn der Handstellhebel in die passende Stellung bewegt wird.

Wenn nur zwei Ladeklappenstellungen ausreichend sind, kann die Halte- und/oder Arretiervorrichtung ggf. auch nur eine Halte- bzw. Fixierstellung aufweisen, beispielsweise um die Ladeklappe in einer höchsten bzw. hohen Stellung zu halten. Wird die Halte- bzw. Arretiervorrichtung gelöst, kann die Ladeklappe aufgrund ihrer Schwerkraft in eine tiefste oder tiefere Stellung gelangen, die beispielsweise durch einen Anschlag vorgegeben sein kann, gegen den die Ladeklappe selbst oder ein Teil des Übertragergetriebes oder auch der Handstellhebel anfährt.

Auch wenn nur eine Halte- und/oder Fixierstellung vorgesehen ist, können formschlüssige Haltemittel beispielsweise in Form der genannten Rastmittel vorgesehen sein, wobei in diesem Fall beispielsweise ein Rastzapfen oder eine Rastklinke in eine Rastausnehmung einrasten kann. Wird die Verrastung gelöst, kann die Ladeklappe in die andere Stellung gelangen, in der sie dann beispielsweise durch einen Anschlag gehalten sein kann.

Die Halte- und/oder Arretiervorrichtung kann eine Vorspanneinrichtung umfassen, die die Haltemittel in die fixierte Stellung vorspannt, sodass die Vorspannkraft der Vorspanneinrichtung überwunden werden muss, wenn der Handstellhebel bewegt werden soll. Beispielsweise kann die Vorspanneinrichtung eine Klemmvorrichtung, die beispielsweise einen Reibbremsbelag umfassen kann, in die Klemmstellung vorspannen. Ist in der vorgenannten Weise ein formschlüssiger Rastmechanismus vorgesehen, kann die Vorspannvorrichtung auf das beweglich gelagerte Rastelement einwirken, um das Rastelement zur verrasteten Stellung hin vorzuspannen. Beispielsweise kann die Vorspanneinrichtung den Rastzapfen oder die Rastklinke zur verrastenden Stellung hin vorspannen, sodass der Rastzapfen oder die Rastklinke von selbst in die Rastausnehmung fällt, wenn der Handstellhebel die passende Stellung erreicht.

Die genannte Vorspannvorrichtung kann insbesondere eine Federeinrichtung umfassen, beispielsweise eine mechanische Feder, die das Halteelement, beispielsweise die genannte Rastklinke oder den Rastzapfen, mit einer Federkraft beaufschlagt.

Je nach Ausbildung der Haltemittel können diese unterschiedlich betätigt bzw. die Vorspannkraft unterschiedlich überwunden werden. Beispielsweise können die Haltemittel einen Handgriff aufweisen, um händisch in die gelöste und/oder schließende Stellung verbracht zu werden, wobei hier die Vorspannkraft überwunden werden kann, wenn eine Vorspannvorrichtung vorgesehen ist.

Alternativ oder zusätzlich zu einer händischen Betätigung der Halte- und/oder Arretiervorrichtung kann letztere aber auch selbsttätig arbeitend ausgebildet sein, um ohne manuelle Betätigungskräfte auf den Handstellhebel die jeweils eingestellte Stellung zu halten und andererseits bei Aufbringen ausreichend großer händischer Betätigungskräfte auf den Handstellhebel sich zu lösen. Beispielsweise könnte ein Rastzapfen oder eine Rastklinke einen kugelkalottenförmigen Eingriffskopf aufweisen, der in kugelpfannenförmige Rastausnehmungen einrasten kann, gleichzeitig aber bei ausreichend großen Stellkräften auf den Handstellhebel ein Zurückdrücken des kugelkalottenförmigen Rastkopfs entgegen der Vorspannkraft bewirken kann. In ähnlicher Weise könnte eine solche selbsttätige Rasteinrichtung auch sägezahnförmige oder keilförmige Rastvorsprünge und -ausnehmungen aufweisen, sodass über die Schrägflächenpaarung bei ausreichend großen Querkräften - in Folge manueller Betätigung des Handstellhebels mit ausreichend großer Kraft - die Federvorspannung überwunden werden kann.

Das Übertragergetriebe zwischen Handstellhebel und Ladeklappe kann grundsätzlich verschieden ausgebildet sein. In Weiterbildung der Erfindung kann das Übertragergetriebe eine Freigängigkeit oder Beweglichkeit und/oder Nachgiebigkeit besitzen, die auch bei festgestelltem Handstellhebel eine Bewegung der Ladeklappe zulässt, insbesondere eine Aufwärtsbewegung, so dass das sich an der Frontwand im Laderaum aufhäufende Erntegut die Ladeklappe aus der jeweils eingestellten Ausgangsstellung nach oben drücken kann. Trotz einer solchen Freigängigkeit und/der Beweglichkeit und/oder Nachgiebigkeit kann das Übertragergetriebe nichtsdestotrotz verschiedene Betriebsstellungen im Sinne von Ausgangsstellungen vorgeben, je nachdem, wie der Handstellhebel eingestellt ist.

Beispielsweise kann das Übertragergetriebe einen Seilzugmechanismus umfassen, bei dem ein Zugseil vom Handhebel gespannt und verstellt werden kann, um die Ladeklappe ein Stück weit nach oben zu ziehen bzw. in verschiedene Höhenstellungen ziehen zu können. Drückt das Erntegut von unten gegen die Ladeklappe, erschlafft das Zugseil und gestattet eine weitere Aufwärtsbewegung der Ladeklappe.

Alternativ oder zusätzlich zu einem solchen Seilzugmechanismus kann das Übertragergetriebe aber auch ein Übertragergestänge umfassen, das längenveränderbar ausgebildet ist, beispielsweise durch zwei teleskopierbar aneinander bzw. ineinander gelagerte Teleskopstangenteile oder zwei Lenker- bzw. Gestängeteile, die längsverschieblich aneinander gelagert sind. Alternativ oder zusätzlich kann das Übertragergestänge auch eine verschiebliche bzw. spielbehaftete Gelenkstelle aufweisen, um die gewünsche Freigängigkeit bzw. Nachgiebigkeit bei blockiertem Handstellhebel zu erzielen, die der Ladeklappe eine Ausweichbewegung unter Erntegutdruck gestattet. Beispielsweise kann ein Gelenkbozen, der eine gelenkige Anlenkung des Übertragergestänges an der Ladeklappe oder am Handstellhebel realisiert, in einem Langloch aufgenommen sein, welches eine gewisse Verschieblichkeit des Gelenkbolzens und damit die gewünschte Beweglichkeit auch bei fixiertem Handstellhebel gestattet.

In einer Anschlagstellung kann ein solches längenveränderbares Übertragergestänge die Ladeklappe in verschiedenen Höhenstellungen halten, wobei die Ladeklappe dann aus einer jeweils eingestellten Ausgangsstellung heraus durch das Erntegut nach oben gedrückt werden kann, wenn sich der Erntegutstock im Laderaum aufbaut.

Um ein ungewolltes Klappern oder Rütteln der Ladeklappe beispielsweise bei holpriger Fahrt über Bodenwellen zu vermeiden, kann die Ladeklappe durch eine Vorspanneinrichtung auch entgegen der Freigängigkeit bzw. entgegen dem Freilauf des Übertragergetriebes in eine Endstellung der Freigängigkeit vorgespannt sein, insbesondere nach unten vorgespannt sein. Fährt der Ladewagen beispielsweise in ein Schlagloch oder über eine Bodenwelle, muss nicht nur das Eigengewicht der Ladeklappe, sondern auch die Vorspannkraft der Vorspannvorrichtung überwunden werden, um die Ladeklappe nach oben auszulenken. Dementsprechend kann durch Einstellung der Härte der Vorspanneinrichtung bzw. der Größe der Vorspannkraft ein ungewolltes Schlagen und Klappern bei holpriger Fahrt vermieden, andererseits aber ein gewolltes Aufdrücken bei entsprechend großem Erntegutdruck ermöglicht werden. Die Vorspanneinrichtung kann in ihrer Härte bzw. Vorspannkraft einstellbar sein.

Insbesondere kann eine solche Vorspannvorrichtung entgegen der Freigängigkeit des Übertragergetriebes in das Übertragergetriebe selbst integriert sein. Sind beispielsweise teleskopierbare Teleskopstangen oder zueinander längsverschiebbar gelagerte Übertragerstangen vorgesehen, kann eine Vorspannvorrichtung die beiden Teleskopstangen oder die beiden Übertragerstangen relativ zueinander gegen die Freigängigkeit bzw. in eine Endstellung vorgespannt sein, die der jeweils eingestellten Ausgangsstellung der Ladeklappe entspricht. Drückt das Erntegut gegen die Ladeklappe, kann die Vorspannvorrichtung nachgeben und die beiden Teleskopstangen bzw. Übertragerstangen zueinander verschoben werden.

Beispielsweise kann zwischen den teleskopierbaren Teleskopstangen bzw. zwischen den zueinander längsverschiebbaren Übertragerstangen eine Druckfeder bzw. eine Federeinrichtung vorgesehen sein, die sich mit gegenüberliegenden Enden jeweils an einer der Stangen abstützt.

Umfasst das Übertragergetriebe den zuvor genannten Seilzugmechanismus, könnte beispielsweise eine Federeinrichtung dem Zugseil entgegenwirkend bzw. das Zugseil vorspannend angeordnet sein. Beispielsweise könnte eine Zug- oder Druckfeder ein ladeklappenseitiges Anlenkstück des Zugseils in entgegengesetzter Richtung zur Zugrichtung des Seils vorspannen, um die Ladeklappe gegen ungewollte Klapperbewegungen zu sichern.

Die genannte Vorspannvorrichtung kann vorteilhafterweise einstellbar ausgebildet sein, um die Ladeklappe mit verschiedener Stärke in die jeweils eingestellte Ausgangsstellung vorspannen zu können.

Vorteilhafterweise kann die Vorspannvorrichtung in der Nachbarschaft des Handstellhebels und/oder an einem Abschnitt des Übertragergetriebes vorgesehen sein, der unterhalb der halben Höhe des Laderaums auf dessen Außenseite liegt, um eine einfache Zugänglichkeit zum Verstellen der Vorspannvorrichtung zu gewährleisten.

Gemäß der Erfindung ist der Ladeklappe und/oder dem Übertragergetriebe ein Sensor zugeordnet, der einen Erntegutdruck gegen die Ladeklappe und/oder eine Auslenkbewegung der Ladeklappe in Folge von Erntegutdruck gegen die Ladeklappe erfassen kann. Das Signal einer solchen Druck- und/oder Auslenkungssensorik kann in der schon genannten Weise dazu verwendet werden, dem Maschinenführer anzuzeigen, dass ein Kratzboden in Betrieb zu setzen ist, und/oder einer Maschinensteuerung zugeführt werden, die in Abhängigkeit des Sensorsignals automatisch einen Kratzbodenantrieb in Gang setzt oder ein anderes Funktionsaggregat des Ladewagens betätigt bzw. steuernd beeinflusst. Beispielsweise kann auch die Aufnahmevorrichtung langsamer gestellt und/oder abgestellt werden, wenn ein Sensorsignal einen zu großen Erntegutdruck an der Ladeklappe bzw. eine zu große Stellbewegung der Ladeklappe anzeigt. Gegebenenfalls kann dies mit einem zusätzlichen Sensorsignal kombiniert werden, welches beispielsweise einen hohen Erntegutdruck und/oder hohen Füllstand am Heck des Laderaums angibt.

In vorteilhafter Weiterbildung der Erfindung kann der genannte Sensor zum Erfassen des Erntegutdrucks gegen die Ladeklappe und/oder zum Erfassen einer Ausweichbewegung der Ladeklappe infolge von Erntegutdruck verstellbar ausgebildet sein, um ein Sensorsignal beispielsweise zum Auslösen des Kratzbodenantriebs bei unterschiedlich hohem Erntegutdruck gegen die Ladeklappe und/oder bei unterschiedlich großer Auslenkung der Ladeklappe abzugeben bzw. bereitzustellen.

Beispielsweise kann der genannte Sensor in verschiedene Sensorpositionen verstellt werden, um beispielsweise verschieden große Auslenkbewegungen der Ladeklappe oder eines damit verbundenen Übertragergetriebeteils zu erfassen.

Um eine einfache Verstellbarkeit bzw. Einstellbarkeit des Sensors zu ermöglichen, kann der Sensor vorteilhafterweise im Bereich des Übertragergetriebes und/oder im Bereich des Handstellhebels und/oder unterhalb der halben Höhe des Laderaums außenseitig am Laderaum angeordnet sein, um für einen Maschinenführer einfach von außen her am Boden stehend zugänglich zu sein.

Insbesondere kann der genannte Sensor einem unteren Endabschnitt des Übertragergetriebes zugeordnet sein, um eine Bewegung eines Übertragergetriebeteils zu erfassen, das in Folge einer Ausweichbewegung der Ladeklappe auftritt. Ist beispielsweise in der vorgenannten Weise das Übertragergetriebe mit zwei teleskopierbaren Teleskopstangen ausgerüstet, kann der Sensor an einer der beide Teleskopstangen montiert sein, um die Verschiebung der anderen Teleskopstange relativ dazu zu erfassen.

Beispielsweise kann der Sensor in einem Langloch in verschiedene Stellungen verschiebbar montiert sein und/oder ein Befestigungsmittelmuster aufweisen, beispielsweise in Form eines Lochbilds, welches es gestattet, den Sensor in verschiedenen Positionen zu montieren.

Der Laderaum kann in Weiterbildung der Erfindung eine oberseitige Begrenzung aufweisen, beispielsweise in Form von Seilen, Riemen oder Ketten oder anderen Begrenzungselementen, die sich vorzugsweise von einem oberen Frontwandabschnitt zu einem oberen Heckwandabschnitt erstrecken können.

Um eine Verstellung der Ladeklappe in verschiedene Ausgangsstellungen zu ermöglichen, ohne mit einer solchen oberen Begrenzung zu kollidieren, kann die obere Begrenzung in vorteilhafter Weiterbildung der Erfindung sich an der Ladeklappe vorbei zum oberen Frontwandabschnitt erstrecken und/oder ggf. auch an einem Querträger enden, der sich im Bereich des heckseitigen Endabschnitts der Ladeklappe erstrecken kann, sodass die obere Begrenzung - vom Heck des Laderaums her betrachtet - vor der Ladeklappe endet.

Bevorzugt erstreckt sich die obere Begrenzung allerdings über die Ladeklappe hinweg bis zum oberen Frontwandabschnitt. Die Ladeklappe kann unterhalb der oberen Begrenzung angeordnet sein und einen Verstellbereich aufweisen, der von der oberen Begrenzung des Laderaums ein Stück weit nach unten reicht. Beispielsweise kann die Ladeklappe in einer unteren Stellung, die für eine Teilbeladung vorgesehen ist, ein Stück weit von der oberen Begrenzung nach unten beabstandet sein.

In einer oberen Endstellung bzw. Ausgangsstellung kann die Ladeklappe unmittelbar unter der oberen Begrenzung liegend angeordnet sein. Drückt das Erntegut dann von unten gegen die Ladeklappe, kann die Ladeklappe sich dennoch ein Stück weit nach oben wegbewegen bzw. aufgedrückt werden, wobei sich hier die obere Begrenzung spannen und/oder elastisch verformen kann. Beispielsweise können die Seile ein Stück weit gestrafft bzw. gedehnt werden, wenn das Erntegut die Ladeklappe nach oben drückt und die Ladeklappe dabei gegen die Seile der oberen Begrenzung drückt.

Die Erfindung wird nachfolgend anhand eines bevorzugten Ausführungsbeispiels und zugehörigen Zeichnungen näher erläutert. In den Zeichnungen zeigen:
- Fig. 1:: eine perspektivische Frontansicht eines landwirtschaftlichen Ladewagens nach einer vorteilhaften Ausführung der Erfindung, die den Verstellmechanismus zum Verstellen der Ladeklappe und dessen Handstellhebel und dessen Übertragergetriebe an der Außenseite der Frontwand zeigt,
- Fig. 2:: eine ausschnittsweise Seitenansicht des Ladewagens aus Fig. 1, die die am oberen Frontwandabschnitt der Frontwand des Laderaums angeordnete Ladeklappe, den auf der Außenseite der Frontwand vorgesehenen Handstellhebel und das dazwischen vorgesehene Übertragergetriebe in verschiedenen Stellpositionen zeigt, wobei eine obere Ladeklappenstellung mit durchgezogenen Strichen und eine tiefere bzw. untere Ladeklappenstellung in strichlierter Darstellung dargestellt sind,
- Fig. 3:: eine ausschnittsweise Seitenansicht des Ladewagens ähnlich Fig. 2, die die Ladeklappe und den Verstellmechanismus hierfür in einer Betriebsstellung für vollständiges Befüllen des Ladewagens zeigt,
- Fig. 4:: eine ausschnittsweise Seitenansicht des Ladewagens ähnlich den Fig. 2 und 3, die die Ladeklappe und den Verstellmechanismus hierfür in einer Betriebsstellung für nur teilweises Befüllen des Laderaums zeigt, und
- Fig. 5:: eine perspektivische, ausschnittsweise Ansicht des Handstellhebels zum Verstellen der Ladeklappe und des verstellbaren Sensors zum Erfassen von Ladeklappenbewegungen.

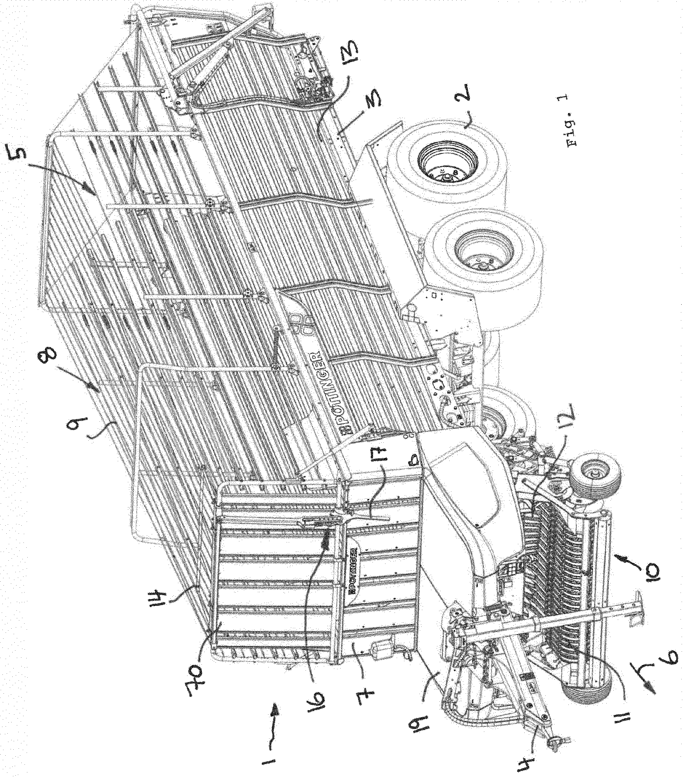

Wie Figur 1 zeigt, kann der landwirtschaftliche Ladewagen 1 in an sich bekannter Weise an das Anbaugerät ausgebildet sein und ein Fahrwerk 2 umfassen, das einen Maschinenrahmen 3 trägt, der über eine Anbauvorrichtung 4 beispielsweise in Form einer Deichsel an einen nicht dargestellten Schlepper anbaubar ist. Auf dem Maschinenrahmen 3 ist ein Laderaum 5 angeordnet, der in Fahrtrichtung 6 betrachtet rechts und links von zwei Seitenwänden sowie vorne und hinten von einer Frontwand 7 und einer Heckklappe begrenzt ist. Die Oberseite des Laderaums 5 kann von einer oberen Begrenzung 8 beispielsweise umfassend Seile 9 und/oder Gurte und/oder Ketten und/oder Stäbe und/oder ein Gitter oder Netz begrenzt sein, wie noch näher erläutert wird.

In an sich ebenfalls bekannter Weise kann im Bereich eines vorderen Endes des Laderaums 5 eine Aufnahmevorrichtung 10 zum Aufnehmen von Erntegut vom Boden und Weiterfördern des aufgenommenen Ernteguts in den genannten Laderaum 5 vorgesehen sein, wobei die genannte Aufnahmevorrichtung 10 eine Pickup 11, die eine rotierende Stachelwalze aufweisen kann, zum Aufsammeln des Ernteguts vom Boden und einen Förderrotor 12 umfassen kann, der das von der Pickup 11 herkommende Erntegut weiter in den Laderaum 5 befördert. Dem genannten Förderrotor 12 kann ggf. ein Schneidwerk zugeordnet sein.

Am Boden des Laderaums 5 kann ein Kratzboden 13 vorgesehen sein, der von einem Kratzbodenantrieb angetrieben werden kann, um im Laderaum 5 befindliches Erntegut im Laderaum 5 zu verteilen und/oder zur heckseitigen Entladeöffnung zu befördern. Der genannte Kratzboden 13 kann beispielsweise Querleisten umfassen, die auf einem endlos umlaufenden Zugmittel wie Riemen oder Ketten befestigt sein können und entlang der Bodenfläche verfahren.

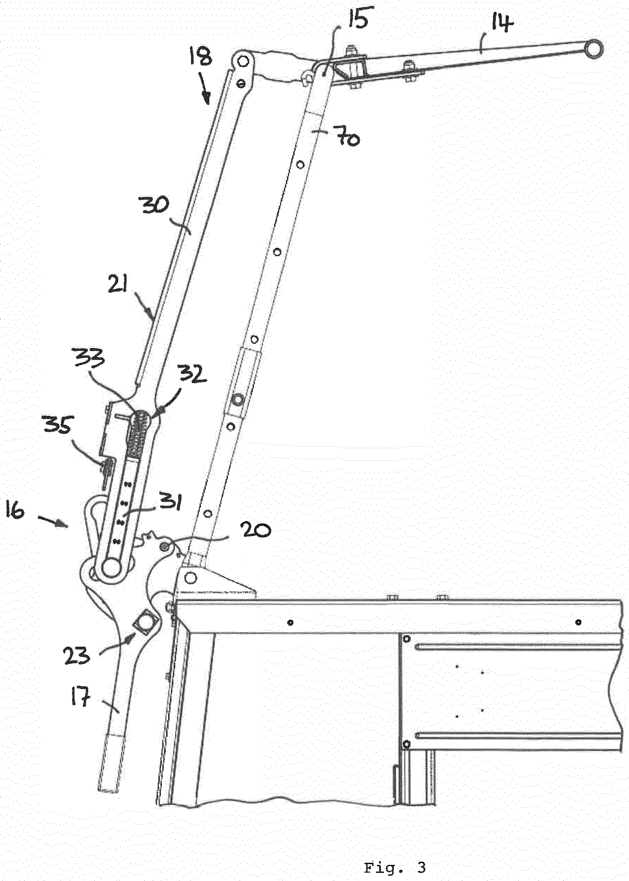

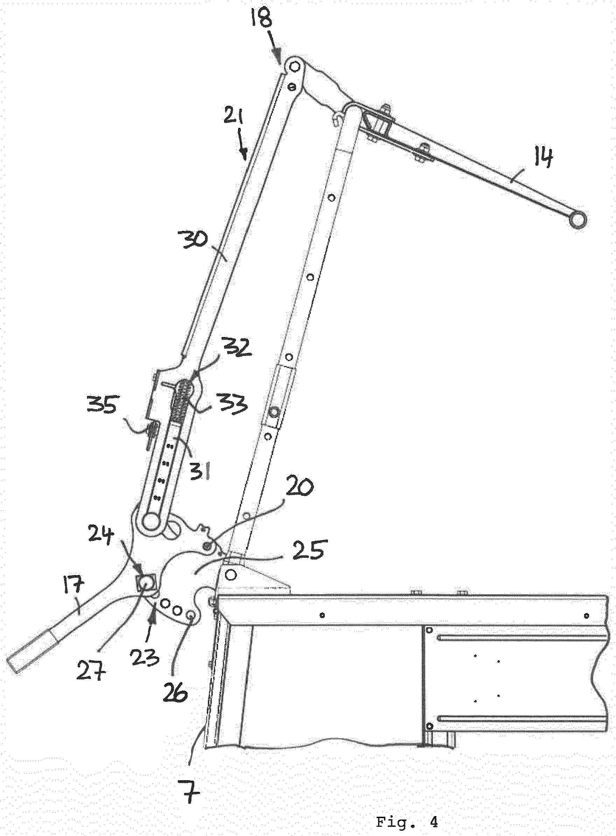

Wie die Figuren 3 bis 4 zeigen, ist im Bereich eines oberen Frontwandabschnitts 7o eine Ladeklappe 14 vorgesehen, die als Panelkorpus ausgebildet sein kann und eine näherungsweise ebene, plattenförmige Kontur aufweisen kann, vgl. Figur 3 und Figur 4. Es wäre allerdings ebenfalls möglich, der Ladeklappe 14 eine gebogene, beispielsweise schaufelförmige Konturierung zu geben, um das sich aufhäufende Erntegut sanft nach hinten in den Laderaum 5 zu lenken.

Die Ladeklappe 14 kann dabei eine durchgängige Fläche bilden, oder auch eine geschlitzte Struktur mit mehreren Panelstreifen nebeneinander aufweisen, oder auch von einem Netz bzw. einem Gitter gebildet sein.

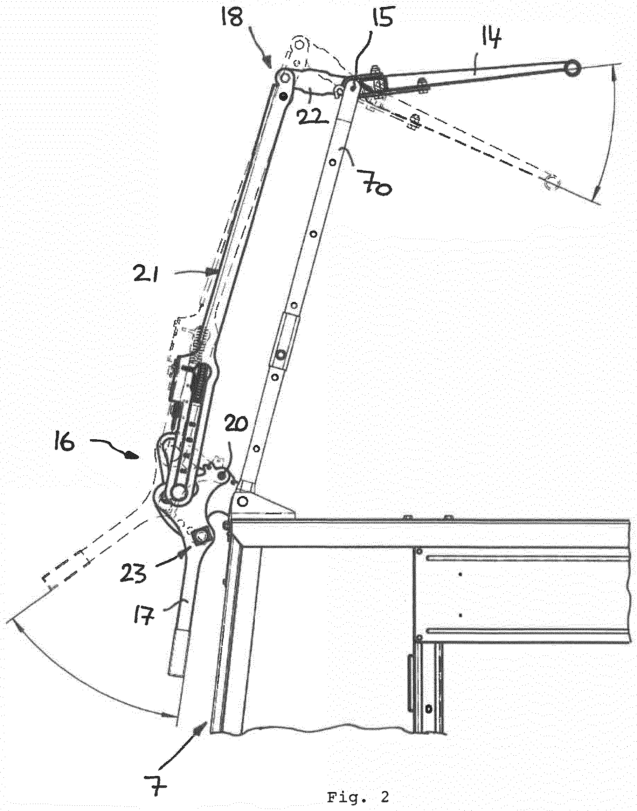

Wie die Figuren 2 bis 4 verdeutlichen, ist die Ladeklappe 14 höhenverstellbar gelagert, wobei dies gemäß der gezeichneten Ausführungsform beispielsweise durch eine schwenkbare Lagerung der Ladeklappe 14 realisiert sein kann. Beispielsweise kann die Ladeklappe 14 im Bereich ihres vorderen Endes, das der Frontwand 7 zugewandt ist, schwenkbar gelagert sein, insbesondere um eine liegende, quer zur Fahrtrichtung 6 ausgerichtete Schwenkachse 15.

Die Ladeklappe 14 kann dabei mit der genannten Schwenkachse 15 an der Frontwand 12, insbesondere an deren oberen Randabschnitt, gelagert sein. Alternativ könnte die Ladeklappe 14 aber auch an den Seitenwänden des Laderaums 5 gelagert sein. Unabhängig hiervon kann die Ladeklappe 14 mit ihrem vorderen Ende unmittelbar benachbart zur Frontwand 7 angeordnet sein, beispielsweise im Wesentlichen bündig daran anschließen.

Wie Figur 2 zeigt, kann die Ladeklappe 14 um eine liegende Ausrichtung herum, in der die Ladeklappe 14 näherungsweise horizontal von der Frontwand 7 nach hinten auskragt, in verschieden geneigte Ausrichtungen aufwärts und/oder abwärts verschwenkt werden, um verschieden geneigte und damit verschieden hohe, insbesondere mit ihrem hinteren Ende verschieden hohe, Betriebsstellungen einzunehmen. Alternativ oder zusätzlich zu der genannten Schwenkbarkeit wäre es aber auch möglich, die Ladeklappe 14 translatorisch verschieblich zu lagern, um die Ladeklappe 14 in verschiedene Höhenstellungen bringen zu können.

Wie die Figuren zeigen, ist zum Verstellen der Ladeklappe 14 in verschiedene Betriebsstellungen ein Verstellmechanismus 16 vorgesehen, der einen Handstellhebel 17 aufweist, der durch ein Übertragergetriebe 18 mit der Ladeklappe 14 verbunden ist, um Stellbewegungen des Handstellhebels 17 in Verstellbewegungen der Ladeklappe 14 umzusetzen, sodass durch Verstellen des Handstellhebels 17 verschiedene Betriebsstellungen der Ladeklappe 14 eingestellt werden können.

Der genannte Handstellhebel 17 und damit die Ladeklappe 14 ist manuell und werkzeugfrei betätigbar, sodass die verschiedenen Ladeklappenstellungen wie gewünscht ohne Zuhilfenahme von Werkzeug einhändig oder zweihändig eingestellt werden können.

Wie insbesondere Figur 1 zeigt, ist der genannte Handstellhebel 17 auf der Außenseite des Laderaums 5 in einer Höhe angeordnet, die es einem auf dem Boden stehenden Maschinenführer gestattet, den Handstellhebel zu greifen und zu betätigen. Der genannte Handstellhebel 17 kann dabei vorteilhafterweise auf der Außenseite der Frontwand 7 angeordnet sein, vorzugsweise zu einer Seite hin versetzt bzw. au-βermittig, um einen an einer Seite des Ladewagens 1 stehenden Maschinenführer das Greifen zu erleichtern. Die Anordnung im Bereich der Frontwand 7 vermeidet es, dass der Handstellhebel 17 beim Vorbeifahren an Hindernissen hängenbleibt.

Von der Höhe her ist der besagte Handstellhebel 17, wie gesagt, ausreichend tief angeordnet, um günstig bedienbar zu sein. Wie die Figuren zeigen, ist der Handstellhebel 17 zumindest teilweise unterhalb der halben Höhe des Laderaums 5 angeordnet. Insbesondere kann der Handstellhebel 17 im Griffbereich eines auf dem Boden stehenden Maschinenführers, beispielsweise etwa auf Bauch- oder Brusthöhe eines Maschinenführers, also beispielsweise im Bereich von etwa 0,8m bis 1,8m über dem Boden angeordnet sein. Generell kann der Handstellhebel in einer Höhe von bis zu maximal etwa 2m Höhe angeordnet sein, um einfach gegriffen werden zu können, wobei auch eine minimale Höhe von 0,5m oder mehr vorteilhaft sein kann, um kein zu starkes Bücken zu erfordern.

Beispielsweise kann der Handstellhebel 16 über einem frontseitigen Chassisteil 19 angeordnet sein, das vom Laderaum 5 nach vorne zum Schlepper hin vorspringt und einen Teil der Anbauvorrichtung 4 abdecken oder bilden kann, wobei ggf. auch Funktionsbauteile wie eine Gelenkwelle, ein Verteilergetriebe, Querwellen und dergleichen im Bereich des Chassisteils 19 verbaut sein können. Wie Figur 1 zeigt, kann der Handstellhebel 17 oberhalb dieses Chassisteils 19 an der Frontwand 7 außermittig, das heißt zu einer rechten oder linken Seite hin versetzt angeordnet sein.

Der genannte Handstellhebel 17 kann an der Frontwand 7 oder einem anderen Rahmenteil des Ladewagens beweglich gelagert sein, insbesondere schwenkbar um eine Schwenkachse 20 gelagert sein. Wie die Figuren zeigen, kann sich die genannte Schwenkachse 20 beispielsweise liegend parallel zur Frontwand 7 erstrecken, wobei es aber auch denkbar wäre, die Schwenkachse näherungsweise liegend etwa in Fahrtrichtung auszurichten, um den Schwenkhebel dann näherungsweise parallel zur Frontwand verschränken zu können.

Das Übertragergetriebe 18 kann ein Übertragergestänge 21 umfassen, um die Stellbewegung des Handstellhebels 17 in eine Schwenkbewegung der Ladeklappe 14 umzusetzen, wobei das Übertragergestänge 21 einerseits am Handstellhebel 17 von dessen Schwenkachse 20 beabstandet gelenkig angelenkt sein und andererseits an der Ladeklappe 14 von deren Schwenkachse 15 beabstandet gelenkig angelenkt sein kann, wobei die Ladeklappe 14 beispielsweise einen über die Frontwand 7 vorstehenden, wippenartigen Betätigungsflansch 22 aufweisen kann, an welchem das Übertragergestänge 21 angelenkt ist, vgl. Fig. 3 und 4.

Um die Ladeklappe 14 in verschiedenen Betriebsstellungen sichern bzw. halten zu können, ist eine Haltevorrichtung 23 vorgesehen, die den Handstellhebel 17 und/oder einen Teil des Übertragergetriebes 21 in einer jeweils eingestellten Stellung fixieren kann. Wie die Figuren zeigen, kann die Haltevorrichtung 23 vorteilhafterweise dem Handstellhebel 17 zugeordnet sein und letzteren in verschiedenen Stellungen arretieren.

Die Haltevorrichtung 23 kann vorteilhafterweise formschlüssige Arretiermittel 24 aufweisen, die verschiedene Arretierstellungen haben. Beispielsweise kann das Ladeteil 25, an dem der Handstellhebel 17 schwenkbar gelagert ist, mehrere Arretierausnehmungen 26 besitzen, die entlang einer Kreisbahn um die Schwenkachse 20 des Handstellhebels 17 verteilt sein können. Am Handstellhebel 17 kann ein Arretierbolzen 27 beweglich gelagert sein, der in einer zurückgezogenen Stellung beim Verstellen des Handstellhebels 17 die Arretierausnehmung 26 überstreicht und, bei entsprechender Stellung des Handstellhebels 17, in eine der genannten Arretierausnehmungen einfahren kann, um die jeweilige Stellung zu halten.

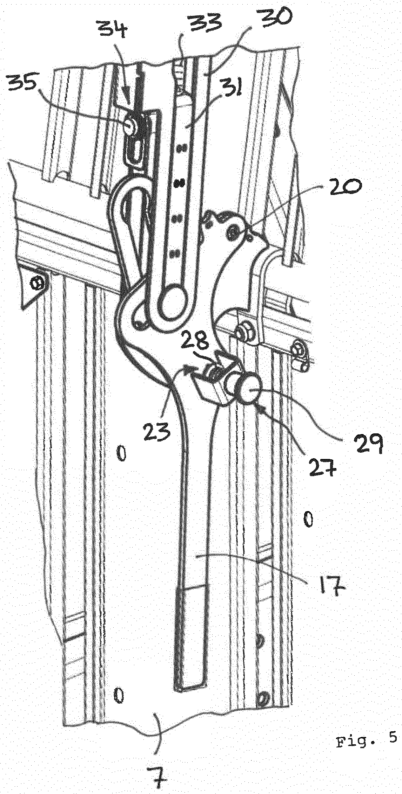

Wie Fig. 5 zeigt, kann der Arretierbolzen 27 durch eine Vorspannvorrichtung 28, die als Feder ausgebildet sein kann, in die verriegelnde Stellung vorgespannt sein, so dass der Arretierbolzen 27 von selbst in die jeweils nächste Arretierausnehmung 26 einrastet, wenn der Arretierbolzen 27 nicht zurückgezogen wird, wobei mit dem Handstellhebel 27 gegebenenfalls hin und her gespielt werden kann, um die nächste Arretierausnehmung 26 zu finden.

Wie Fig. 5 zeigt, kann der Arretierbolzen 27 einen beispielsweise pilzkopfförmigen Greifabschnitt 29 aufweisen, um von einer Hand einfach gegriffen werden zu können, um den Arretierbolzen 27 entgegen der Vorspannung der Vorspannvorrichtung 28 lösen zu können.

Wie die Figuren 3 und 4 verdeutlichen, ist das Übertragergetriebe 18 vorteilhafterweise mit einer Freigängigkeit versehen, die eine zumindest begrenzte Aufwärtsbewegung der Ladeklappe 14 auch bei verriegeltem Handstellhebel 17 ermöglicht. Beispielsweise kann das genannte Übertragergestänge 21 des Übertragergetriebes 18 zwei zueinander längsverschiebliche Streben- bzw. Stangenteile 30, 31 umfassen, die beispielsweise nach Art von Teleskopschüssen ineinander teleskopierbar bzw. verschiebbar sein können, um die effektive Länge des Übertragergestänges 21 zu verändern. Alternativ oder zusätzlich wäre es auch möglich, eines der Enden des Übertragergestänges 21 beispielsweise in einem Langloch zu führen, genauer gesagt den Anlenkbolzen in einem Langloch im Gestänge zu führen. Wie die Figuren zeigen, kann beispielsweise der Anlenkbolzen am unteren Ende des Übertragergestänges 21 an einem Stangenteil 31 befestigt sein, welcher längsverschieblich am anderen Stangenteil 30 geführt ist, insbesondere in einem Langloch.

Wird beispielsweise in der in Fig. 4 dargestellten Betriebsstellung die Ladeklappe 14 vom Erntegut nach oben gedrückt, führt dies zu einer Abwärtsbewegung des oberen Stangenteils 30. Da der untere Stangenteil 31 über den Handstellhebel 17 fixiert ist, verschiebt sich der obere Stangenteil 30 relativ zum unteren Stangenteil 31.

Um ungewollte Aufwärtsbewegungen der Ladeklappe 14 beispielsweise beim Überfahren eines Schlaglochs zu vermeiden, kann dem Übertragergetriebe 18 eine Vorspannvorrichtung 32 zugeordnet sein, die die Freigängigkeit des Übertragergetriebes 18 beeinflusst und das Übertragergetriebe 18 auf eine der Endstellungen der begrenzten Freigängigkeit hin vorspannt. Ist die Freigängigkeit im Bereich des Übertragergestänges 21 realisiert, kann die Vorspannvorrichtung 32 zwischen den Stangenteilen 30 und 31 wirken, um die beiden Stangenteile 30 und 31 relativ zueinander vorzuspannen, insbesondere in eine Ausgangsstellung maximaler Gestänge-Länge.

Wie Fig. 3 und 4 zeigen, kann die Vorspannvorrichtung 32 beispielsweise eine Federeinrichtung 33 umfassen, die zwischen die beiden Stangenteile 30 und 31 geschaltet ist. Beispielsweise kann eine Druckfeder beispielsweise in Form einer Schraubenfeder vorgesehen sein, die sich mit ihren Enden einerseits am oberen Stangenteil 30 und andererseits am unteren Stangenteil 31 abstützt, um die beiden Stangenteile 30 und 31 auseinanderzutreiben bzw. das Gestänge 21 zu längen. Wird beim Aufwärtsdrücken der Ladeklappe 14 der obere Stangenteil 30 nach unten verschoben, wird die genannte Feder 33 zusammengedrückt.

Wie Fig. 5 zeigt, kann die Verstellung der Ladeklappe 14 durch Aufwärtsdrücken des Ernteguts mittels einer Sensorik 34 erfasst werden, um ein Sensorsignal bereitzustellen, das in der schon genannten Weise beispielsweise dazu genutzt werden kann, um den Kratzboden 13 zu betätigen.

Die genannte Sensorik 34 kann grundsätzlich verschieden ausgebildet und verschieden angeordnet sein, wobei beispielsweise ein Drucksensor zum Erfassen des Erntegutdrucks gegen die Ladeklappe 14 vorgesehen sein kann. Alternativ oder zusätzlich kann die Sensorik 34 auch einen Wegsensor umfassen, um einen Stellweg der Ladeklappe 14 zu erfassen.

Vorteilhafterweise kann ein Sensor 35 der Sensorik 34 verstellbar ausgebildet, insbesondere in verschiedenen Positionen montierbar bzw. verstellbar sein, um bei verschieden großen bzw. starken Bewegungen der Ladeklappe 14 ein entsprechendes Sensorsignal abzugeben.

Vorteilhafterweise kann der genannte Sensor 35 in der Nähe des Handstellhebels 17 vorgesehen sein, um einfach zugänglich und damit einfach verstellbar zu sein.

Vorzugsweise kann der genannte Sensor 35 an der Schnittstelle der beiden Stangenteile 30 und 31 des Übertragergestänges 31 vorgesehen sein, um die Verschiebung der beiden Stangenteile 30, 31 relativ zueinander zu erfassen, welche sich einstellt, wenn das Erntegut die Ladeklappe 14 nach oben drückt.

Wie Fig. 5 zeigt, kann der genannte Sensor 35 beispielsweise in einer Schiebeführung beispielsweise in Form einer Langlochführung verschieblich montiert sein, um verschiedene Sensorstellungen einstellen zu können. Der Sensor 35 kann vorzugsweise in einer Richtung verstellt und in verschiedenen Positionen eingestellt werden, die zumindest näherungsweise der Richtung der Freigängigkeit bzw. Nachgiebigkeit des Übertragergestänges 21 entspricht.

Wie Fig. 1 zeigt, ist die Ladeklappe 14 unter der oberen Begrenzung 8, insbesondere unter den Seilen 9 angeordnet, so dass die obere Begrenzung 8 des Laderaums 5 die Verstellung der Ladeklappe 14 nicht behindert.

Insbesondere sind die genannten Seile 9 nicht an der hinteren, auf- und abwärts verstellbaren Kante der Ladeklappe 1 angelenkt, sondern erstrecken sich über die Ladeklappe 14 hinweg bis zur Oberseite der Frontwand 7, an welcher die Seile 9 angeschlagen sein können.

Wird die Ladeklappe 14 nach unten verschwenkt, wie dies Fig. 4 zeigt, stellt sich ein mehr oder minder großer Spalt zwischen der oberen Begrenzung 8 und der Ladeklappe 14 ein. Wird die Ladeklappe 14 indes nach oben verschwenkt, wie dies Fig. 3 zeigt, kann die Ladeklappe 14 durchaus von unten gegen die Seile 8 drücken, wobei die Seile 8 ggf. auch ein wenig gespannt werden können. In diesem Fall kann die obere Begrenzung 8 des Laderaums 5 eine Doppelfunktion erfüllen: An sich dient die obere Begrenzung 8 dazu, das Herausfallen von Erntegut bei vollständiger Beladung zu vermeiden. Zusätzlich kann durch das elastische Spannen der Seile 8 aber auch die Freigängigkeit der Ladeklappe 14 nach oben gesteuert bzw. beeinflusst werden, da das nach oben drückende Erntegut nicht nur das Gewicht der Ladeklappe 14 und die Vorspannkraft der Vorrichtung 32 überwinden muss, sondern auch noch die Seile 9 spannen muss, um die Ladeklappe 14 ein Stück weiter nach oben drücken und damit das Sensorsignal zur Betätigung des Kratzbodens 13 auslösen zu können.

## Patentansprüche

1. Landwirtschaftlicher Ladewagen, mit einer Aufnahmevorrichtung (10) zum Aufnehmen von Erntegut vom Boden sowie einem Laderaum (5) zum Speichern des aufgenommenen Ernteguts, wobei an einem oberen Frontwandabschnitt (7o) einer Frontwand (7) des Laderaums (5) eine Ladeklappe (14) schwenkbar und/oder höhenverstellbar gelagert ist, wobei ein Verstellmechanismus (16) zum Einstellen verschiedener Betriebsstellungen der Ladeklappe (14) sowie eine Sensorik (34) zum Erfassen von Erntegutdruck auf die Ladeklappe (14) und/oder zum Erfassen einer Positionsveränderung der Ladeklappe (14) in Folge von Erntegutdruck vorgesehen sind, wobei der Verstellmechanismus (16) einen Handstellhebel (17) zum werkzeugfreien, händischen Einstellen verschiedener Betriebsstellungen der Ladeklappe (14) umfasst, der auf einer Außenseite des Laderaums (5) unterhalb der halben Höhe des Laderaums (5) angeordnet und durch ein Übertragergetriebe (18) mit der Ladeklappe (14) verbunden ist.

2. Landwirtschaftlicher Ladewagen nach einem der vorhergehenden Ansprüche, wobei der genannte Handstellhebel an der Frontwand (7) außermittig zu einer Seite hin versetzt angeordnet ist.

3. Landwirtschaftlicher Ladewagen nach einem der vorhergehenden Ansprüche, wobei der genannte Handstellhebel (17) im Griffbereich eines auf dem Boden stehenden Maschinenführers angeordnet ist.

4. Landwirtschaftlicher Ladewagen nach einem der vorhergehenden Ansprüche, wobei der genannte Handstellhebel (17) um eine Schwenkachse (20) schwenkbar gelagert ist, wobei die genannte Schwenkachse (20) vorzugsweise liegend quer zur Fahrtrichtung (6) und/oder parallel zur Frontwand (7) ausgerichtet ist.

5. Landwirtschaftlicher Ladewagen nach einem der vorhergehenden Ansprüche, wobei eine Halte- und/oder Arretiervorrichtung (23) zum Fixieren des Handstellhebels (17) und/oder zum Fixieren eines Übertragerteils des Übertragergetriebes (18) in verschiedenen Betriebsstellungen vorgesehen ist.

6. Landwirtschaftlicher Ladewagen nach dem vorhergehenden Anspruch, wobei die Halte- und/oder Arretiervorrichtung (23) im Bereich des Handstellhebels (17) angeordnet, insbesondere am Handstellhebel (17) vorgesehen ist, und/oder dazu ausgebildet ist, eine zweihändige Bedienung des Handstellhebels (17) zu gestatten und/oder zu erzwingen.

7. Landwirtschaftlicher Ladewagen nach einem der beiden vorhergehenden Ansprüche, wobei die Halte- und/oder Arretiervorrichtung (23) formschlüssige Arretiermittel (24) zum formschlüssigen Arretieren des Handstellhebels (17) und/oder des Übertragergetriebes (18) in verschiedenen Betriebsstellungen aufweist, wobei die formschlüssigen Arretiermittel (24) vorzugsweise mehrere Arretierausnehmungen (26), die auf einer Kreisbahn um eine Schwenkachse (20) des Handstellhebels (17) verteilt angeordnet sind, sowie ein Arretierelement (27) umfassen, welches beweglich gelagert und in jeweils eine der Arretierausnehmungen (26) einfahrbar und ausfahrbar ist.

8. Landwirtschaftlicher Ladewagen nach einem der vorhergehenden Ansprüche, wobei eine Vorspannvorrichtung (32) zum Vorspannen der Halte- und/oder Arretiervorrichtung (23) in deren Fixierstellung vorgesehen ist und/oder die Halte- und/oder Arretiervorrichtung (23) selbst arretierend ausgebildet ist.

9. Landwirtschaftlicher Ladewagen nach einem der vorhergehenden Ansprüche, wobei das Übertragergetriebe (18) eine Freigängigkeit und/oder Nachgiebigkeit besitzt, die auch bei fixiertem Handstellhebel (17) eine vom Erntegut induzierte Stellbewegung, insbesondere Aufwärtsbewegung, der Ladeklappe (14) zulässt, wobei dem Übertragergetriebe (18) vorzugsweise eine Vorspannvorrichtung zugeordnet ist, die bezüglich der Freigängigkeit und/oder Nachgiebigkeit des Übertragergetriebes wirksam ist und das Übertragergetriebe (18) in eine definierte Ausgangsstellung vorspannt, aus der das Übertragergetriebe (18) bei ausreichend großem Erntegutdruck gegen die Ladeklappe (14) bewegbar ist.

10. Landwirtschaftlicher Ladewagen nach einem der vorhergehenden Ansprüche, wobei das Übertragergetriebe (18) ein Übertragergestänge (21) aufweist, das längenveränderbar ausgebildet ist, vorzugsweise in eine maximal gelenkte Stellung vorgespannt ist.

11. Landwirtschaftlicher Ladewagen nach dem vorhergehenden Anspruch, wobei das Übertragergestänge (21) zwei Stangenteile (30, 31) aufweist, die zueinander längsverschieblich geführt sind, wobei die Längsverschieblichkeit der beiden Stangenteile (30, 31) durch Anschläge in beide Richtungen beschränkt ist, sodass die Verstellbarkeit der Ladeklappe (14) bei fixiertem Handstellhebel (17) begrenzt ist, wobei vorzugsweise zwischen den beiden Stangenteilen (30, 31) eine Federeinrichtung (33) zum Vorspannen der beiden Stangenteile (30, 31) in eine Längenstellung vorgesehen ist.

12. Landwirtschaftlicher Ladewagen nach einem der vorhergehenden Ansprüche, wobei die Sensorik (34) einen einstellbaren Sensor (35) aufweist, der im Bereich des Handstellhebels (17) und/oder an einer Außenseite des Laderaums (5) unterhalb der halben Höhe des Laderaums (5) angeordnet ist, wobei der Sensor (35)
- der freigängigen Schnittstelle des Übertragergetriebes (18) zugeordnet ist, und/oder
- positionsverstellbar ausgebildet ist und verschiedene Betriebsstellungen aufweist, in denen ein Sensorsignal bei unterschiedlich starker Auslenkung der Ladeklappe (14) aus deren eingestellter Betriebsstellung bereitgestellt wird.

13. Landwirtschaftlicher Ladewagen nach einem der vorhergehenden Ansprüche, wobei der Laderaum (5) eine obere Begrenzung (8) aufweist und die Ladeklappe (14) unter der genannten oberen Begrenzung (8) angeordnet ist, wobei die Ladeklappe (14) relativ zu der oberen Begrenzung (8) verstellbar ist.

14. Landwirtschaftlicher Ladewagen nach dem vorhergehenden Anspruch, wobei sich die obere Begrenzung (8) über die Ladeklappe (14) hinwegerstreckt und an dem oberen Frontwandabschnitt (7o) der Frontwand (7) angelenkt ist, insbesondere zur Ladeklappe (14) derart positioniert ist, dass die Ladeklappe (14) in einer höchsten Betriebsstellung gegen die obere Begrenzung (8) drückt und in einer niedrigsten Betriebsstellung der Ladeklappe (14) ein Zwischenraum zwischen der Ladeklappe (14) und der oberen Begrenzung (8) vorgesehen ist.

## Claims

1. Agricultural loader having a pick-up device (10) for picking up crop from the ground and having a loading space (5) for storing the picked-up crop, wherein a loading flap (14) is pivoted and/or height-adjustably mounted on an upper front wall section (7o) of a front wall (7) of the loading space (5), wherein an adjustment mechanism (16) for setting different operating positions of the loading flap (14) and a sensor system (34) for detecting crop pressure on the loading flap (14) and/or for detecting a change in position of the loading flap (14) as a result of crop pressure are provided, wherein the adjustment mechanism (16) comprises a manual adjustment lever (17) for tool-free, manual adjustment of various operating positions of the loading flap (14), which is arranged on an outer side of the loading space (5) below half the height of the loading space (5) and is connected to the loading flap (14) by a transformer gear (18).

2. Agricultural loader according to any one of the preceding claims, wherein the manual control lever is arranged on the front wall (7) eccentrically offset to one side.

3. Agricultural loader according to any one of the preceding claims, wherein the manual control lever (17) is arranged in the grip region of a machine operator standing on the ground.

4. Agricultural loader according to any one of the preceding claims, wherein the manual control lever (17) is pivotably mounted about a pivot axis (20), wherein the pivot axis (20) is preferably oriented transversely to the direction of travel (6) and/or parallel to the front wall (7).

5. Agricultural loader according to any one of the preceding claims, wherein a holding and/or locking device (23) is provided for fixing the manual control lever (17) and/or for fixing a transformer part of the transformer gear (18) in various operating positions.

6. Agricultural loader according to the preceding claim, wherein the holding and/or locking device (23) is arranged in the region of the manual control lever (17), in particular is arranged on the manual control lever (17), and/or is designed to allow and/or force two-handed operation of the manual control lever (17).

7. Agricultural loader according to either one of the two preceding claims, wherein the holding and/or locking device (23) has form-fitting locking means (24) for form-fitting locking of the manual control lever (17) and/or the transformer gear (18) in various operating positions, wherein the form-fitting locking means (24) preferably have a plurality of locking recesses (26) arranged distributed on a circular path about a pivot axis (20) of the manual control lever (17), and comprise a locking element (27), which is movably mounted and can be retracted and extended into one of the locking recesses (26).

8. Agricultural loader according to any one of the preceding claims, wherein a pretensioning device (32) is provided for pretensioning the holding and/or locking device (23) in its fixing position and/or the holding and/or locking device (23) is designed to be self-locking.

9. Agricultural loader according to any one of the preceding claims, wherein the transformer gear (18) has a freedom of movement and/or compliance that allows an actuating movement of the loading flap (14) induced by the crop, in particular an upward movement, even when the manual control lever (17) is fixed, wherein the transformer gear (18) is preferably assigned a pretensioning device that is effective with respect to the freedom of movement and/or compliance of the transformer gear and pretensions the transformer gear (18) into a defined initial position from which the transformer gear (18) can be moved against the loading flap (14) when the crop pressure is sufficiently high.

10. Agricultural loader according to any one of the preceding claims, wherein the transformer gear (18) has a transformer linkage (21), which is designed to be length-adjustable, preferably pretensioned into a maximum deflected position.

11. Agricultural loader according to the preceding claim, wherein the transformer linkage (21) has two rod parts (30, 31), which are guided so as to be longitudinally displaceable relative to one another, wherein the longitudinal displaceability of the two rod parts (30, 31) is limited by stops in both directions, so that the adjustability of the loading flap (14) is limited when the manual control lever (17) is fixed, wherein a spring device (33) is preferably provided between the two rod parts (30, 31) for pretensioning the two rod parts (30, 31) into a longitudinal position.

12. Agricultural loader according to any one of the preceding claims, wherein the sensor system (34) has an adjustable sensor (35), which is arranged in the region of the manual control lever (17) and/or on an outer side of the loading space (5) below half the height of the loading space (5), wherein the sensor (35)
- is assigned to the free-moving interface of the transformer gear (18), and/or
- is designed to be position-adjustable and has different operating positions in which a sensor signal is provided when the loading flap (14) is deflected to different degrees from its set operating position.

13. Agricultural loader according to any one of the preceding claims, wherein the loading space (5) has an upper boundary (8) and the loading flap (14) is arranged below the upper boundary (8), wherein the loading flap (14) is adjustable relative to the upper boundary (8).

14. Agricultural loader according to the preceding claim, wherein the upper boundary (8) extends over the loading flap (14) and is articulated to the upper front wall section (7o) of the front wall (7), in particular is positioned relative to the loading flap (14) in such a way that the loading flap (14) presses against the upper boundary (8) in a highest operating position and a space is provided between the loading flap (14) and the upper boundary (8) in a lowest operating position of the loading flap (14).

## Revendications

1. Remorque agricole, avec un dispositif de ramassage (10) pour ramasser un produit récolté au sol et un espace de chargement (5) pour stocker le produit récolté ramassé, un volet de chargement (14) étant monté de manière pivotante et/ou réglable en hauteur sur une section de paroi avant supérieure (7o) d'une paroi avant (7) de l'espace de chargement (5), un mécanisme de réglage (16) étant prévu pour ajuster différentes positions de fonctionnement du volet de chargement (14) ainsi qu'un système de capteur (34) pour détecter la pression de produit récolté sur le volet de chargement (14) et/ou pour détecter un changement de position du volet de chargement (14) en conséquence de la pression de produit récolté, le mécanisme de réglage (16) comprenant un levier de réglage manuel (17) pour l'ajustement manuel, sans outil, de différentes positions de fonctionnement du volet de chargement (14), qui est agencé sur un côté extérieur de l'espace de chargement (5) en dessous de la moitié de la hauteur de l'espace de chargement (5) et est relié au volet de chargement (14) par un mécanisme de transmission (18).

2. Remorque agricole selon l'une quelconque des revendications précédentes, ledit levier de réglage manuel étant agencé sur la paroi avant (7) en décalage de manière excentrée vers un côté.

3. Remorque agricole selon l'une quelconque des revendications précédentes, ledit levier de réglage manuel (17) étant agencé dans la zone de préhension d'un conducteur de machine se tenant debout sur le sol.

4. Remorque agricole selon l'une quelconque des revendications précédentes, ledit levier de réglage manuel (17) étant monté de manière pivotante autour d'un axe de pivotement (20), ledit axe de pivotement (20) étant de préférence orienté transversalement à la direction de déplacement (6) et/ou parallèlement à la paroi avant (7).

5. Remorque agricole selon l'une quelconque des revendications précédentes, un dispositif de maintien et/ou de blocage (23) étant prévu pour fixer le levier de réglage manuel (17) et/ou pour fixer une partie de transmission du mécanisme de transmission (18) dans différentes positions de fonctionnement.

6. Remorque agricole selon la revendication précédente, le dispositif de maintien et/ou de blocage (23) étant agencé dans la zone du levier de réglage manuel (17), notamment sur le levier de réglage manuel (17), et/ou étant réalisé pour permettre et/ou imposer une commande à deux mains du levier de réglage manuel (17).

7. Remorque agricole selon l'une quelconque des deux revendications précédentes, le dispositif de maintien et/ou de blocage (23) présentant des moyens de blocage par complémentarité de forme (24) pour bloquer par complémentarité de forme le levier de réglage manuel (17) et/ou le mécanisme de transmission (18) dans différentes positions de fonctionnement, les moyens de blocage par complémentarité de forme (24) présentant de préférence plusieurs évidements de blocage (26) agencés en étant répartis sur une trajectoire circulaire autour d'un axe de pivotement (20) du levier de réglage manuel (17), ainsi qu'un élément de blocage (27) qui est monté de manière mobile et peut être introduit dans respectivement l'un des évidements de blocage (26) et retiré de celui-ci.

8. Remorque agricole selon l'une quelconque des revendications précédentes, un dispositif de précontrainte (32) étant prévu pour précontraindre le dispositif de maintien et/ou de blocage (23) dans sa position de fixation et/ou le dispositif de maintien et/ou de blocage (23) est lui-même réalisé de manière autobloquante.

9. Remorque agricole selon l'une quelconque des revendications précédentes, le mécanisme de transmission (18) possédant une liberté de mouvement et/ou une souplesse qui, même lorsque le levier de réglage manuel (17) est fixé, permettent un mouvement de réglage, notamment un mouvement vers le haut, du volet de chargement (14) induit par le produit récolté, un dispositif de précontrainte étant de préférence associé au mécanisme de transmission (18), qui agit sur la liberté de mouvement et/ou la souplesse du mécanisme transmission et précontraint le mécanisme de transmission (18) dans une position initiale définie à partir de laquelle le mécanisme de transmission (18) peut se déplacer contre le volet de chargement (14) lorsque la pression de produit récolté est suffisamment importante.

10. Remorque agricole selon l'une quelconque des revendications précédentes, le mécanisme de transmission (18) présentant une tringlerie de transmission (21) qui est réalisée de manière à pouvoir changer de longueur, de préférence est précontrainte dans une position de braquage maximal.

11. Remorque agricole selon la revendication précédente, la tringlerie de transmission (21) présentant deux parties de tringle (30, 31) qui sont guidées de manière à pouvoir se déplacer longitudinalement l'une par rapport à l'autre, le déplacement longitudinal des deux parties de tringle (30, 31) étant limité dans les deux directions par des butées, de telle sorte que la possibilité de réglage du volet de chargement (14) est limitée lorsque le levier de réglage manuel (17) est fixé, un appareil à ressort (33) étant prévu de préférence entre les deux parties de tringle (30, 31) pour précontraindre les deux parties de tringle (30, 31) dans une position longitudinale.

12. Remorque agricole selon l'une quelconque des revendications précédentes, le système de capteur (34) présentant un capteur ajustable (35) qui est agencé dans la zone du levier de réglage manuel (17) et/ou sur un côté extérieur de l'espace de chargement (5) en dessous de la moitié de la hauteur de l'espace de chargement (5), le capteur (35)
- étant associé à l'interface libre du mécanisme de transmission (18) et/ou
- étant réalisé de manière à pouvoir être réglé en position et présentant différentes positions de fonctionnement dans lesquelles un signal de capteur est fourni lorsque le volet de chargement (14) est dévié de sa position de fonctionnement ajustée avec une force différente.

13. Remorque agricole selon l'une quelconque des revendications précédentes, l'espace de chargement (5) présentant une limite supérieure (8) et le volet de chargement (14) étant agencé sous ladite limite supérieure (8), le volet de chargement (14) étant réglable par rapport à la limite supérieure (8).

14. Remorque agricole selon la revendication précédente, la limite supérieure (8) s'étendant au-delà du volet de chargement (14) et étant articulée sur la section de paroi avant supérieure (7o) de la paroi avant (7), notamment au volet de chargement (14) de telle sorte que le volet de chargement (14) appuie contre la limite supérieure (8) dans une position de fonctionnement la plus haute et qu'un espace intermédiaire est prévu entre le volet de chargement (14) et la limite supérieure (8) dans une position de fonctionnement la plus basse du volet de chargement (14).
